Europäisches Patentamt

European Patent Office

Office européen des brevets

(11) Publication number: **0 397 622**
**A2**

## EUROPEAN PATENT APPLICATION

(21) Application number: 90830202.9

(51) Int. Cl.⁵: **C09J 7/02, C09D 11/10**

(22) Date of filing: 08.05.90

(30) Priority: 12.05.89 IT 6735889

(43) Date of publication of application:
14.11.90 Bulletin 90/46

(84) Designated Contracting States:
**AT BE CH DE DK ES FR GB GR LI LU NL SE**

(71) Applicant: **VIBAC S.p.A.**
**Strada Ticineto Salita San Salvatore**
**I-15040 Ticineto (Alessandria)(IT)**

(72) Inventor: **Maietti, Adriano**
**Strada Cavalcavia 1/A**
**I-15033 Casale Monferrato (Alessandria)(IT)**

(74) Representative: **Rambelli, Paolo et al**
**Jacobacci-Casetta & Perani S.p.A. Via Alfieri**
**17**
**I-10121 Torino(IT)**

(54) Improvements to printable self-adhesive tapes with polyolefin substrates.

(57) A pressure-sensitive and printable self-adhesive tape of the type including a substrate in the form of a polyolefin film has a release layer deposited on one face of the substrate, including from 50 to 62 parts by weight of polyamide resin produced by the condensation of fatty acid dimers and/or trimers with diamines and/or triamines, from 30 to 42 parts by weight of ketone resin, and from 5 to 10 parts by weight of a release agent constituted by a polyvinyl carbamate obtained from stearyl isocyanate and a polyvinyl alcohol having a Brookfield viscosity of between 5 and 45 cPs (20-45 $10^{-3}$ Pascal seconds). In order to prevent set-off phenomena, particularly for self-adhesive tapes in which the adhesive layer is of the type with a solvent, a commercially-available type of polyamide ink is used with a polyvinyl carbamate additive produced from a polyvinyl alcohol having a preferred viscosity of between 4 and 6 cPs (4-6 $10^{-3}$ Pascal seconds).

EP 0 397 622 A2

EP 0 397 622 A2

## Improvements to printable self-adhesive tapes with polyolefin substrates

The present invention relates to a pressure-sensitive, self-adhesive tape of the type comprising a substrate in the form of a polyolefin film, a pressure-sensitive adhesive layer on one face of the substrate, and a polymer layer of release coating composition on the other face of the substrate.

In particular, the object of the invention is to provide a self-adhesive tape of the type specified above the back of which can be printed and which, even in the absence of a protective layer for covering the printing, does not suffer from set-off phenomena or transfer of printing ink which may occur when the tape is wound on itself in a roll. This problem is particularly noticeable when the adhesive is of the type with a solvent.

A subject of the present invention is therefore constituted by a self-adhesive tape of the aforementioned type, characterised in that the release layer composition comprises, per 100 parts by weight of the composition:

- from 50 to 62 parts by weight of polyamide resin produced by the condensation of fatty acid dimers and/or trimers with diamines and/or triamines,

- from 30 to 42 parts by weight of ketone resin, and

- from 5 to 10 parts by weight of a non-stick agent constituted by a polyvinyl carbamate obtained from stearyl isocyanate and a polyvinyl alcohol having a Brookfield viscosity of between 5 and 45 cPs (5-45 $10^{-3}$ Pascal seconds).

The viscosity of the polyvinyl alcohol is preferably between 20 and 45 m Pas. sec. The viscosities are intended to be measured with a Brookfield viscometer in a 4% aqueous solution according to DIN 53015. The polyvinyl carbamate is conveniently prepared from a 25% solution of the aforementioned reagents in xylene.

The polyamide resin used is preferably a resin produced by the condensation of dilinoleic acid with diamines and/or triamines having an amine number no greater than 3 mg KOH/g, an acidity number no greater than 4 mg KOH, and a molecular weight of between 500 and 5000. Amongst the resins available commercially, the product Polymid 4584 (trademark) (Lawter Chemicals) and the products U.C. 2931 and U.C. 2209 (trademarks) (Union Camp) may be cited.

The polyketone resin is produced by the aldol auto-condensation of cyclic aliphatic ketones or by the condensation of cyclic aliphatic ketones, preferably cyclohexanone, with formaldehyde. The resin krumbhaar K-1717 (trademark) (Lawter Chemicals) is particularly advantageous.

The release composition described above has been investigated in detail and is particularly advantageous in relation to the use of a printing ink of the flexographic type produced by the modification of conventional polyamide inks available commercially. A polyamide-based ink composition therefore falls within the scope of the invention and is characterised in that it includes from 14 to 25 parts by weight of a polyvinyl carbamate obtained from stearyl isocyanate and a polyvinyl alcohol having a Brookfield viscosity of between 4 and 6 cPs (4-6 $10^{-3}$ Pascal seconds) per 100 parts of the dry polyamide ink composition. The viscosity is measured in a 4% aqueous solution with a Brookfield viscometer according to DIN 53015. Commercially available polyamide inks typically have a dry content, constituted by pigments and polyamide resin, which may vary between 30 and 50% by weight.

Preferred characteristics of the polyvinyl alcohol used are a degree of hydrolysis of between 86 and 90 mol %, a volatile content of less than 5%, and a pH of between 5 and 8 measured in a 4% aqueous solution at 20°C.

The ink for printing the tapes, particularly tapes with solvent on polypropylene, is produced in a first step by the preparation of an additive comprising from 40-50 parts of a 25% solution of polyvinyl carbamate in xylene and from 50 to 60 parts of a solvent mixture. The solvent mixture preferably includes isopropyl alcohol, butyl alcohol, heptane or octane. Preferred solvent mixtures are composed of:

| isopropyl alcohol | 30-50 |
| --- | --- |
| butyl alcohol | 0-10 |
| octane | 50-70 |

or, for example,

2

| isopropyl alcohol | 30-40 |
|---|---|
| heptane | 60-70 |

A stable additive with a long shelf life is thus obtained and can be sold for use by the final user.

The printing ink can be prepared immediately before use simply by the mixture of the additive with polyamide flexographic ink as supplied.

Typically, the additive composed of polyvinyl carbamate and the solvent mixture is added to the ink in a volumetric ratio of between 0.6 and 1.2 (volume of ink/volume of additive).

Further characteristics and advantages of the self-adhesive tape and the ink composition according to the invention will become clear from the following example which describes a preferred embodiment.

Example

Samples of printable self-adhesive tape were prepared with the use of a substrate constituted by a bioriented polypropylene film treated by the corona effect on one face and flame-treated on the other face, according to conventional techniques.

A lacquer composition was used for depositing the release layer on the back of the tape and had a polymer content of approximately 10% in a solvent mixture including 80% by weight of toluene and 20% by weight of isopropyl alcohol. The polymer composition had the following composition expressed in percentages by weight:

| Polymid 4584 resin | 62% by weight |
|---|---|
| Krumbhaar 1717 resin | 30% by weight |
| Polyvinyl carbamate | 8% by weight |

The polyvinyl carbamate had a Brookfield RVT viscosity of 200 cPs, spindle 1 at 20 rpm, in a 4% aqueous solution and was obtained from a polyvinyl alcohol with a Brookfield viscosity of $25 \cdot 10^{-3}$ Pas.sec.

The release composition was spread on one face of the polypropylene substrate and the solvent was evaporated in an oven at a temperature of from 70 to 100°C until evaporation was complete.

A primer and a solvent adhesive of conventional type constituted by 40% of natural rubber and tackifier resin in a hexane and toluene solvent was deposited on the other face of the substrate. After the deposition of the solution containing the adhesive, the solvent was removed by hot air, leaving a residue of 18-21 $c/m^2$ on the substrate. The finished self-adhesive tape was then wound on to reels and cut into rolls of the desired dimensions.

In order to prepare the ink for printing the tape, 45 parts of a solvent mixture composed of 40 parts of isopropyl alcohol, 10 parts of n-butyl alcohol and 50 parts of n-octane were added to 45 parts by weight of polyvinyl stearyl carbamate having a Brookfield rvt viscosity, spindle 1 at 20 rpm, of $5 \cdot 10^{-3}$ Pascal.sec.

The additive thus obtained was added to a conventional polyamide ink of the Crodapol (trademark) series in a volumetric ratio of 1:1.2 (volume of ink/volume of additive).

The polypropylene tape was printed by means of a flexographic printer at a speed of approximately 100 m per minute, approximately 40% of the total surface of the back of the tape being covered by the printing. Samples of printed self-adhesive tape were tested to evaluate their adhesion, rolling ball tack, loop tack, unrolling force and ink-fixing characteristics, immediately after production and after ageing in an oven at 45° for 5 days.

The data given in the following tables constitute average values obtained relating to two tapes with different quantities of adhesive.

EP 0 397 622 A2

| Physiochemical data on coated tapes after printing. | | |
| --- | --- | --- |
| | Roll 1 | Roll 2 |
| Quantity of adhesive (g/mq) | 19 | 18.1 |
| Adhesion (Peel adhesion) (g/cm) | 290 | 280 |
| Rolling ball tack (cm) | 0.5 | 0.5 |
| Loop tack (g/cm) | 370 | 270 |
| Unrolling (g/cm) | 150 | 150 |
| Ink fixing | no set-off | no set-off |

| Physicochemical data on the same tapes after ageing in an oven at 45° for 5 days. | | |
| --- | --- | --- |
| Quantity of adhesive (g/mq) | 19 | 18.1 |
| Adhesion (Peel adhesion) (g/cm) | 280 | 280 |
| Rolling ball tack (cm) | 3.5 | 0.5 |
| Loop tack (g/cm) | 323 | 363 |
| Unrolling (g/cm) | 205 | 200 |
| Ink fixing | no set-off | no set-off |

## Claims

1. A pressure-sensitive, self-adhesive tape comprising a substrate in the form of a polyolefin film, a pressure-sensitive adhesive layer on one face of the substrate, and a polymer layer of a release coating composition on the other face of the substrate, characterised in that the polymer layer of the release composition comprises, per 100 parts by weight of the composition:
- from 50 to 62 parts by weight of polyamide resin produced by the condensation of fatty acid dimers and/or trimers with diamines and/or triamines,
- from 30 to 42 parts by weight of ketone resins, and
- from 5 to 10 parts by weight of a non-stick agent constituted by a polyvinyl carbamate obtained from stearyl isocyanate and a polyvinyl alcohol, having a Brookfield viscosity of between 4 and 45 cPs (5-45 $10^{-3}$ Pascal seconds).

2. A self-adhesive tape according to Claim 1, characterised in that it is also printed with a printing ink which is deposited on the release layer and is produced from a conventional polyamide ink modified by the addition of a non-stick agent constituted by a polyvinyl carbamate obtained from stearyl isocyanate and a polyvinyl alcohol having a Brookfield viscosity of between 4 and 6 cPs (4 and 6 $10^{-3}$ Pascal seconds).

3. An adhesive tape according to Claim 2, characterised in that the ink includes from 14 to 25 parts by weight of polyvinyl stearyl carbamate per 100 parts of dry polyamide ink.

4. An ink composition, particularly for printing the back of a self-adhesive tape, comprising a polyamide-based polymeric composition, characterised in that it includes from 14 to 25 parts by weight of a polyvinyl carbamate obtained from stearyl isocyanate and a polyvinyl alcohol having a Brookfield viscosity of between 4 and 6 $10^{-3}$ Pascal seconds, per 100 parts of the dry ink composition.

5. An ink composition according to Claim 4, obtainable by the addition to a polyamide ink as supplied of an additive including from 40 to 50 parts of a 25% solution of polyvinyl stearyl carbamate in xylene, and from 50 to 60 parts of a solvent mixture, the additive being added to the ink in a ratio of from 0.6 to 1.2 (volume of ink/volume of additive).

6. An ink composition according to Claim 5, characterised in that the solvent mixture comprises from 30 to 50 parts of isopropyl alcohol, from 0 to 10 parts of butyl alcohol, and from 50 to 70 parts of octane.

7. An ink composition according to Claim 5, characterised in that the solvent mixture comprises from 30 to 40 parts of isopropyl alcohol and from 60 to 70 parts of heptane.

4